# EUROPEAN PATENT SPECIFICATION

(11) **EP 4 406 819 B1**
(45) Date of publication and mention of the grant of the patent: **29.10.2025**
(21) Application number: 23198460.0
(22) Date of filing: 20.09.2023
(51) Int. Cl.: B62J 17/10, B62J 17/02, B62M 7/02

(54) **STRADDLED VEHICLE**
GRÄTSCHSITZFAHRZEUG
VÉHICULE À SELLE

(30) Priority: 24.01.2023 JP 2023008686
(43) Date of publication of application: 31.07.2024
(73) Proprietor: Yamaha Hatsudoki Kabushiki Kaisha, Iwata-shi, Shizuoka 438-8501 (JP)
(72) Inventor: TAKARA, Koji, Iwata-shi, 438-8501 (JP)
(74) Representative: Studio Torta S.p.A.

(56) References cited:
- CN-A- 110 979 530
- JP-U- S5 997 184
- US-A- 4 479 676
- US-A1- 2009 108 629
- US-A1- 2019 329 833
- US-B2- 11 180 021

## Description

### Technical field

The present invention relates to a straddled vehicle.

### Prior Art

A straddled vehicle has been known in the art that includes a heat exchanger such as a radiator and an oil cooler, and side cowls covering the left side and the right side of the heat exchanger, wherein airflow outlets are formed in the side cowls to discharge air having passed through the heat exchanger. Japanese Laid-Open Utility Model Publication No. S61-109886 discloses a technique for improving the cooling efficiency of the heat exchanger by increasing the amount of air that passes through the heat exchanger.

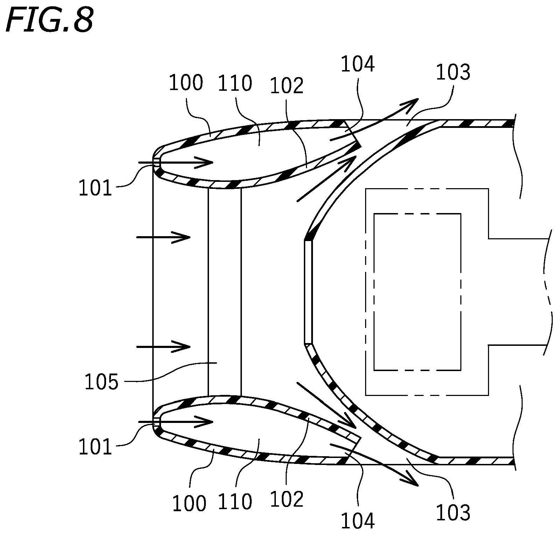

Japanese Laid-Open Utility Model Publication No. S61-109886 discloses a motorcycle having airflow intake ports **101** at the front end portion of side cowls **100,** and guide plates **102** on the inside of the side cowls **100** as shown in FIG. **8****.** A flow paths **110** through which air flows is formed between the side cowl **100** and the guide plate **102.** An outlet port **104,** through which air is discharged from the flow path **110,** is formed in the vicinity of the airflow discharge port **103.** Air flowing into the flow path **110** through the airflow intake port **101** is accelerated by flowing through the flow path **110** and is then discharged through the outlet port **104.** Due to the accelerated airflow, the pressure of the air through the airflow discharge port **103** is reduced. This facilitates the discharge of the air, having passed through the radiator **105,** through the airflow discharge port **103.** Since the amount of air that passes through the radiator **105** is increased, the cooling efficiency of the radiator **105** is improved.

Patent Document No. 1: Japanese Laid-Open Utility Model Publication No. S61-109886

However, with the motorcycle described above, a guide plate **102** for forming the flow path **110** that accelerates the air inside the side cowl **100** needs to be arranged inside the side cowl **100.** Space for the flow path **110** and for installing the guide plate **102** needs to be reserved inside the side cowl **100.** This restricts the dimension of the radiator **105.** With the motorcycle described above, it is difficult to increase the volume of the radiator **105.**
US-B-11,180,021 discloses a straddled vehicle according to the preamble of claim 1.
US-A-2019/329833 discloses a straddled vehicle with a wing member including a first wing, a second wing, and a connection section connecting one-end sides of the first wing and the second wing. Both the wings are disposed with a spacing therebetween in the longitudinal vehicle direction, and the first wing is located on a vehicle body front upper side relative to the second wing. The connection section connects the one-end sides of both the wings that extend from a cowling toward a transverse-directionally outer side. A front edge of the first wing is inclined such that its transverse-directionally outer side portion is located on the vehicle body rear side relative to its transverse-directionally inner side portion, in plan view of the vehicle body. A rear edge of the first wing is inclined such that its transverse-directionally outer side portion is located on the vehicle body front side relative to its transverse-directionally inner side portion, in plan view. CN-A-110979530 discloses a cover structure of a saddle-type vehicle, which can inhibit exposure of the interior of a vehicle body, effectively exhaust air of a radiator, form a smooth appearance shape, improve aerodynamic performance and further improve drivability. A middle cover is arranged at least on the side of the heat sink between the front cover and the bottom cover. The middle cover is provided with a main cover and an outer cover arranged on the outer side of the main cover in the vehicle width direction. A main cover is provided with amain cover upper opening along the side edge of the heat sink. An outer cover is provided so as to overlap the main cover upper opening when viewed from the side of the vehicle. The outer cover is provided with an outer cover opening, and the main cover upper opening and the outer cover opening partially overlap when viewed from the side of the vehicle.
US-A-2009/108629 discloses a vehicle cowl, which may be arranged on a side portion of a vehicle, and include a duct that extends in a vehicle width direction. The duct may have an inside opening and an outside opening. The inside opening may face inward, toward the vehicle body, and the outside opening may face outward from the vehicle. The cowl may further include a panel for covering a portion of the outside opening. The panel may be arranged so that, when the vehicle is viewed from the front, a portion of the outside opening left uncovered by the panel is shielded by a forward part of the panel, and thus not visible. The vehicle may be a motorcycle.
JP-U-S5997184 discloses a front cover member that defines the interior space is disposed in the front portion of a vehicle body, a duct opening to the front wall of the front cover member is provided in the interior chamber portion, and a rear end opening portion. The front cover member is provided with a radiator and an exhaust port is formed in a side wall of the front cover member.
US-A-4479676 discloes a method and apparatus for channelling air through openings in a motorcycle fairing. The air channelling apparatus includes an air scoop having an inlet opening for communication with an interior of the air scoop and a mounting mechanism for securing the air scoop adjacent to the openings in the fairing. The mounting mechanism permits both rotation of the air scoop and limited movement of the air scoop away from the fairing. With the inlet opening facing forwardly, ambient air is channelled by the air scoop through the openings in the fairing and into an air space behind the fairing. The ambient air is then selectively directed through an outlet of the air space toward the rider. With the inlet opening of the air scoop facing rearwardly, a portion of the air heated from the engine components flow through the air space toward the openings in the fairing, while a remaining portion flows toward the outlet which directs the heated air toward the rider.

### Description of the invention

The present invention has been made in view of these points, and an object thereof is to provide a straddled vehicle that can both increase the volume of the heat exchanger arranged inside the side cowl and improve the cooling efficiency.

A straddled vehicle according to the invention is defined in independent claim 1. Preferred embodiments of the invention are provided in the dependent claims.

A straddled vehicle disclosed herein includes: a heat exchanger; a side cowl arranged outward in a vehicle width direction relative to the heat exchanger, the side cowl having an airflow discharge port formed rearward relative to the heat exchanger; and a guide member arranged outward of the side cowl in the vehicle width direction and forward of the airflow discharge port. The guide member includes a first connecting portion that is located forward of the airflow discharge port and connected to the side cowl, and an outer side surface that extends forward and outward in the vehicle width direction from the first connecting portion.

With the straddled vehicle described above, the guide member not only extends forward from the side cowl but also extends outward in the vehicle width direction, so on the horizontal cross section, the length of the outer side surface of the guide member is longer than the length of the side cowl. The velocity of the air flowing along the outer side surface of the guide member is relatively large, thereby reducing the pressure at the airflow discharge port. This facilitates the discharge of air through the airflow discharge port, thereby increasing the amount of air flowing through the heat exchanger. Therefore, it is possible to improve the cooling efficiency of the heat exchanger. Here, since the guide member is arranged outside the side cowl, the volume of the heat exchanger is not restricted due to the installation of the guide member. Therefore, it is possible to expand the volume of the heat exchanger. With the straddled vehicle described above, it is possible to both expand the volume of the heat exchanger and improve the cooling efficiency.

On a horizontal cross section passing through the airflow discharge port, the side cowl extends forward and inward in the vehicle width direction from the airflow discharge port, and the outer side surface of the guide member extends forward and outward in the vehicle width direction.

On the horizontal cross section passing through the airflow discharge port, the outer side surface of the guide member includes a front portion that extends rearward in a vehicle front-rear direction, and a rear portion that extends inward in the vehicle width direction from a rear end of the front portion.

This allows air to flow smoothly along the outer side surface of the guide member. Since it is possible to effectively facilitate the discharge of air through the airflow discharge port, it is possible to improve the cooling efficiency of the heat exchanger.

On a horizontal cross section passing through the airflow discharge port, the outer side surface of the guide member is curved toward the airflow discharge port.

This allows air to flow smoothly along the outer side surface of the guide member. Since it is possible to effectively facilitate the discharge of air through the airflow discharge port, it is possible to improve the cooling efficiency of the heat exchanger.

The guide member may include a plate portion having the outer side surface. The plate portion may be spaced outward in the vehicle width direction from the side cowl.

Compared to the case where the guide member is a block body, it is possible to ensure a sufficient distance between the outer side surface of the guide member and the airflow discharge port in the vehicle width direction while preventing an increase in the weight of the guide member. The air flowing along the outer side surface of the guide member can sufficiently reduce the pressure at the airflow discharge port. Therefore, since it is possible to effectively facilitate the discharge of air through the airflow discharge port, it is possible to improve the cooling efficiency of the heat exchanger.

The guide member may include a second connecting portion that is located downward of the first connecting portion and connected to the side cowl. The guide member and the side cowl together may delimit a duct having an inlet port that has an opening facing forward and an outlet port that has an opening facing downward.

This allows air to flow smoothly along the outer side surface of the guide member toward the airflow discharge port, and allows air flowing along the outer side surface of the side cowl to flow downward through the outlet port. This prevents the air flowing along the outer side surface of the guide member from being disturbed by the air flowing along the outer side surface of the side cowl.

The duct may include a closed portion that is located downward relative to an upper end of the airflow discharge port and upward relative to a lower end of the airflow discharge port, and that does not have an opening facing rearward.

Thus, it is possible with the closed portion to prevent the air flowing along the outer side surface of the guide member from being disturbed by the air flowing along the outer side surface of the side cowl.

A dimension of the closed portion in a vehicle up-down direction may be equal to or greater than 1/2 a dimension of the airflow discharge port in the vehicle up-down direction.

Thus, since the dimension of the closed portion in the vehicle up-down direction is relatively large, it is possible with the closed portion to sufficiently prevent air flowing along the outer side surface of the guide member from being disturbed by air flowing along the outer side surface of the side cowl.

The straddled vehicle may include an airflow guide plate arranged inside the duct.

Thus, it is possible to rectify the airflow in the duct. It is possible to suppress the air resistance of the guide member.

As the vehicle is viewed from the side, a length of the first connecting portion may be longer than a length of the second connecting portion.

An upper end of the guide member may be located upward relative to an upper end of the airflow discharge port. A lower end of the guide member may be located downward relative to a lower end of the airflow discharge port.

A dimension of the first connecting portion of the guide member in a vehicle up-down direction may be equal to or greater than a dimension of the airflow discharge port in the vehicle up-down direction.

As the vehicle is viewed from the side, the airflow discharge port may extend rearward and upward.

The straddled vehicle may include an in-line four-cylinder internal combustion engine arranged rearward of the heat exchanger.

As described above, with the straddled vehicle set forth above, it is possible to both expand the volume of the heat exchanger and improve the cooling efficiency. Therefore, it is possible to sufficiently cool even an in-line four-cylinder internal combustion engine. Since the dimension of the in-line four-cylinder internal combustion engine in the vehicle width direction is relatively large, even if the guide member is added on the outside of the side cowl in the vehicle width direction, the percentage of increase in the vehicle width direction of the straddled vehicle can be kept relatively small.

According to the present invention, it is possible to both increase the volume of the heat exchanger arranged inside the side cowl and improve the cooling efficiency.

### Brief description of the drawings

FIG. **1** is a left side view of a motorcycle according to one embodiment.
FIG. **2** is a cross-sectional view taken along line II-II of FIG. **1****.**
FIG. **3** is a side view of a left guide member and a left side cowl as viewed from the left side of the motorcycle.
FIG. **4** is a front view of a left half portion of the motorcycle.
FIG. **5** is a perspective view of the left guide member and the left side cowl as viewed from the front side of the motorcycle.
FIG. **6** is a perspective view of the left guide member and the left side cowl as viewed from the rear side of the motorcycle.
FIG. **7** is a view showing the flow of air in the vicinity of the side cowl and the guide member.
FIG. **8** is a view showing the flow of air in the vicinity of a side cowl of a conventional motorcycle.

### Embodiments of the invention

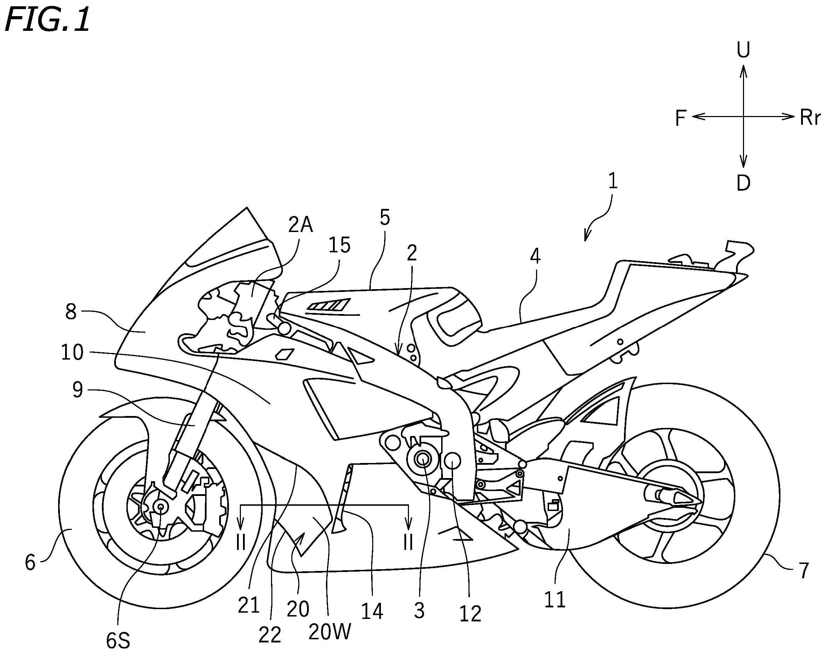

One embodiment of the straddled vehicle will now be described with reference to the drawings. FIG. **1** is a left side view of a motorcycle **1,** which is an example of the straddled vehicle.

The terms front, rear, left, right, up and down, as used in the description below, refer to these directions as seen from a virtual rider seated on a seat **4** while the motorcycle **1** is standing upright on a horizontal surface with no rider and no load thereon, unless specified otherwise. The designations F, Rr, L, R, U and D, as used in the figures, refer to front, rear, left, right, up and down, respectively.

The motorcycle **1** includes a vehicle body frame **2** having a head pipe **2A,** an internal combustion engine (hereinafter referred to as "engine") **3** supported on the vehicle body frame **2,** a seat **4** supported on the vehicle body frame **2,** a fuel tank **5,** a front wheel **6,** a rear wheel **7,** a front cowl **8,** left and right side cowls **10,** left and right guide members **20.**

A steering shaft (not shown) is inserted in the head pipe **2A** so that the steering shaft can rotate left and right. A handlebar **15** is fixed to the upper portion of the steering shaft. The front fork **9** is fixed to the lower portion of the steering shaft. The lower end portion of the front fork **9** is connected to the axle **6S** of the front wheel **6.**

The fuel tank **5** is arranged rearward of the head pipe **2A.** The seat **4** is arranged rearward of the fuel tank **5.** The fuel tank **5** and the seat **4** are arranged upward of the engine **3.** The rear wheel **7** is connected to the engine **3** via a power transmission member (not shown) such as a chain. The rear wheel **7** is the drive wheel driven by the engine **3.** The rear wheel **7** is connected to the rear end portion of a rear arm **11.** The front end portion of the rear arm **11** is pivotably connected to the vehicle body frame **2** by a pivot shaft **12.**

The front cowl **8** is arranged forward of the head pipe **2A.** The front cowl **8** is arranged upward of the front wheel **6.**

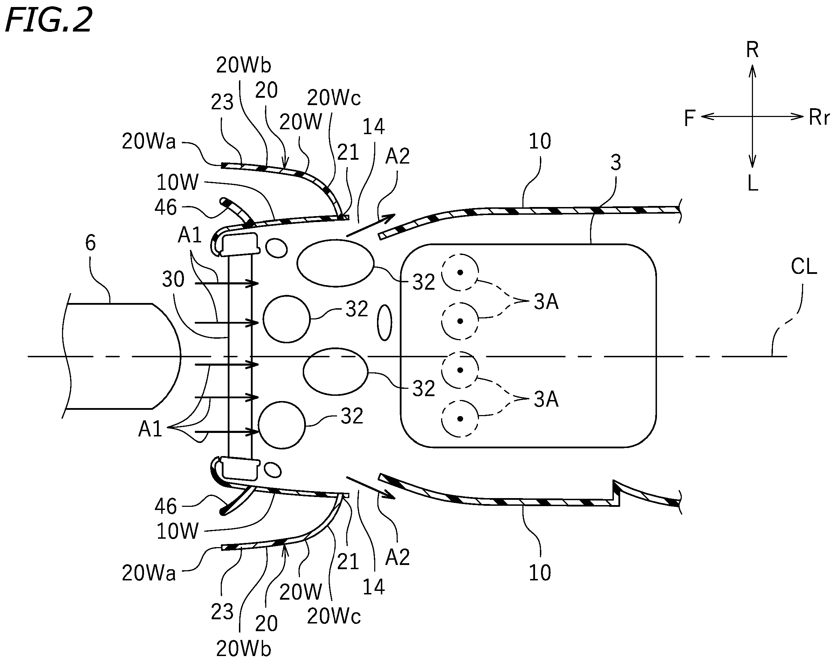

FIG. **2** is a horizontal cross-sectional view schematically showing a part of the motorcycle **1,** and is a cross-sectional view taken along line II-II of FIG. **1****.** As shown in FIG. **2****,** the motorcycle **1** includes an oil cooler **30,** which is an example of the heat exchanger. The oil cooler **30** and the engine **3** are connected together via piping (not shown). The oil in the engine **3** is cooled by the oil cooler **30.** When driving the motorcycle **1,** air flows from the front side toward the rear side. The air **A1** flowing outside the oil cooler **30** exchanges heat with the oil flowing inside the oil cooler **30.** Thus, the oil is cooled by the air **A1**.

While there is no particular limitation on the form of the engine **3,** it is an in-line four-cylinder internal combustion engine in the present embodiment. The engine **3** includes four cylinders **3A** arranged next to each other in the vehicle width direction. The four cylinders **3A** are arranged next to each other in the left-right direction. An exhaust pipe **32** is arranged rearward of the oil cooler **30.**

The side cowl **10** is arranged outward in the vehicle width direction relative to the oil cooler **30.** Note that outward in the vehicle width direction refers to the direction away from the vehicle center line **CL.** Inward in the vehicle width direction refers to the direction toward the vehicle center line **CL.** The left side cowl **10** is arranged leftward of the oil cooler **30** and the right side cowl **10** is arranged rightward of the oil cooler **30.** As shown in FIG. **1****,** in the present embodiment, the side cowl **10** is separate from the front cowl **8** and is connected to the front cowl **8.** Note however that the side cowl **10** may be integrally formed with the front cowl **8.**

An airflow discharge port **14** is formed in the side cowl **10.** As the vehicle is viewed from the side, the airflow discharge port **14** extends rearward and upward. As the vehicle is viewed from the side, the airflow discharge port **14** extends straight. Note however that as the vehicle is viewed from the side, the airflow discharge port **14** may be curved. As shown in FIG. **2****,** the airflow discharge port **14** is formed rearward relative to the oil cooler **30.** Air passing through the oil cooler **30** is discharged through the airflow discharge port **14** (see arrow **A2** in FIG. **2****).**

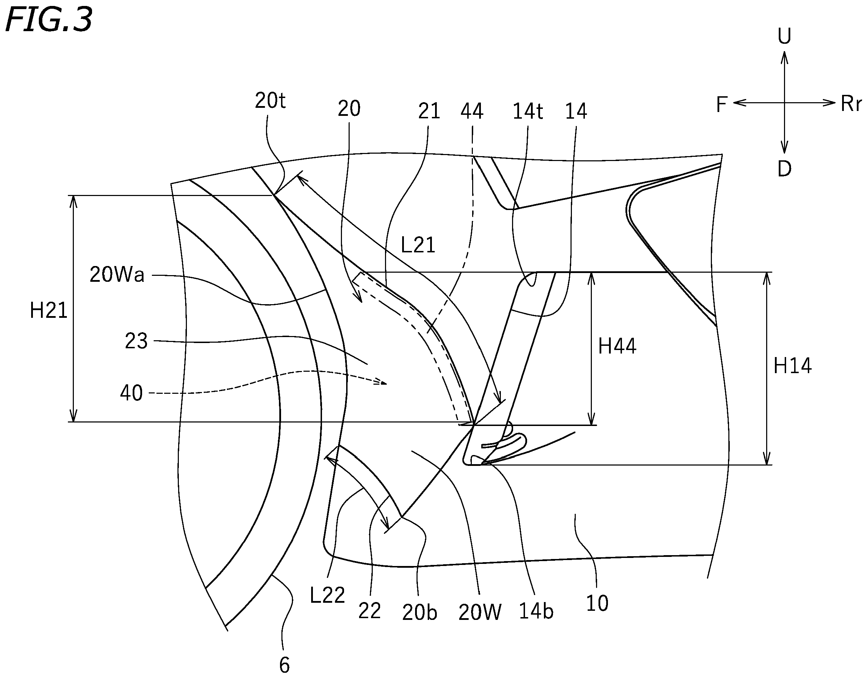

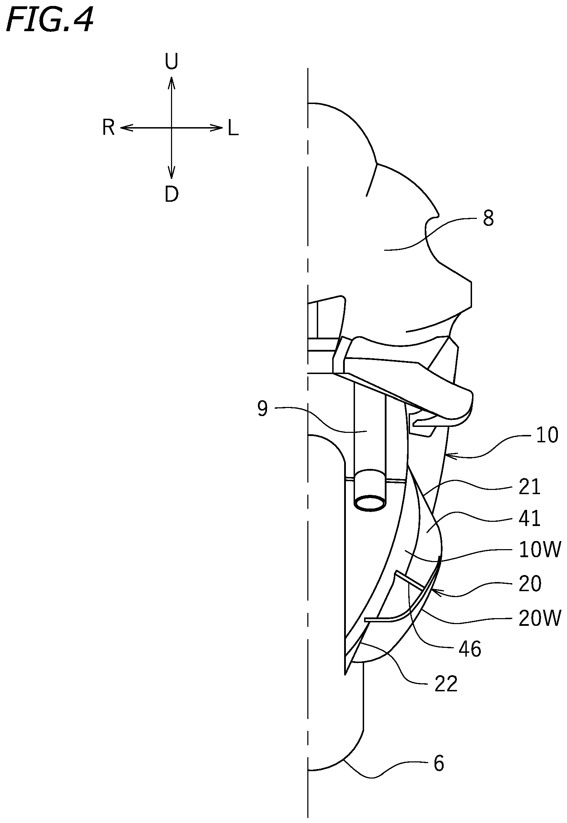

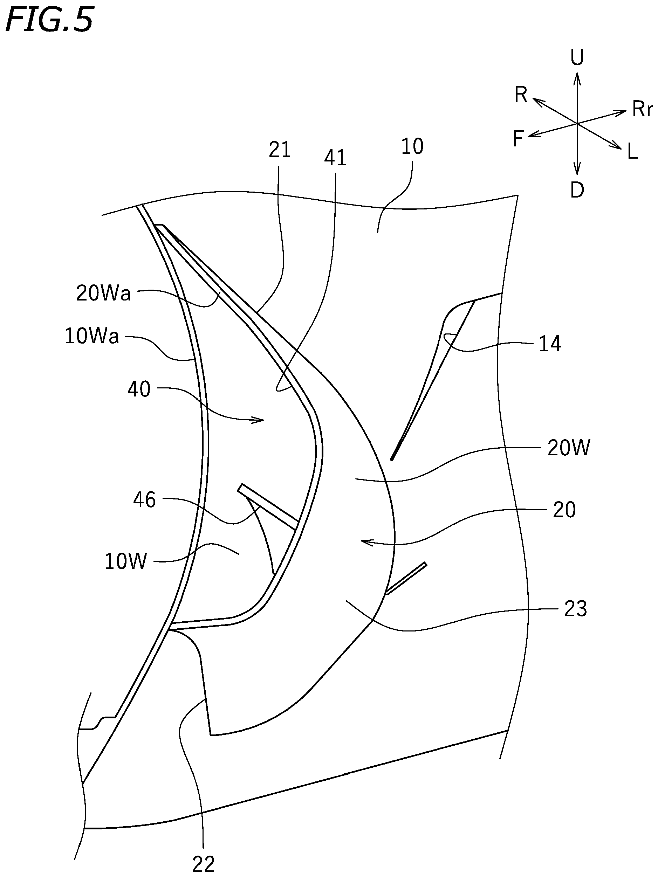

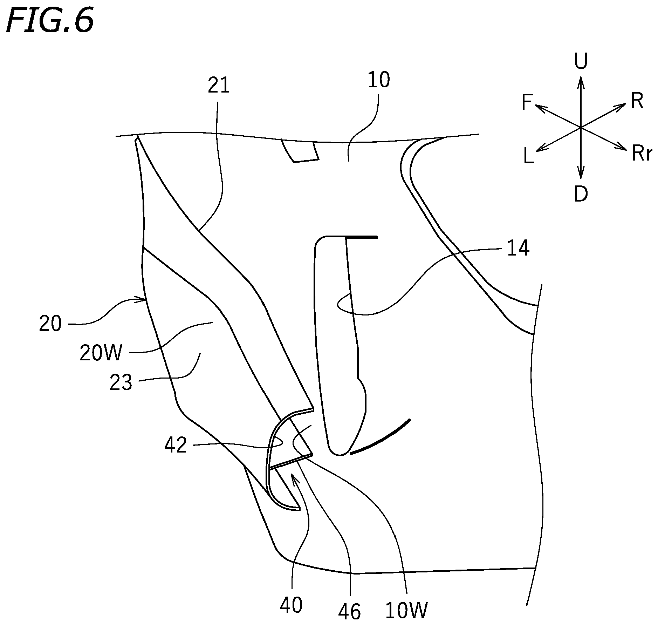

Next, the guide member **20** will be described. FIG. **3** is a side view showing the left guide member **20** and the left side cowl **10** as viewed from the left side of motorcycle **1.** FIG. **4** is a front view of the left half portion of the motorcycle **1.** Note however that the oil cooler **30** is not shown in FIG. **4****.** FIG. **5** is a perspective view showing the left guide member **20** and the left side cowl **10** as viewed from the front side of the motorcycle **1.** FIG. **6** is a perspective view showing the left guide member **20** and the left side cowl **10** as viewed from the rear side of the motorcycle **1.** Note that the left and right guide members **20** are symmetrical with respect to the vehicle center line **CL.** In the following, the left guide member **20** will be described and explanation of the right guide member **20** will be omitted.

The guide members **20** are members that guide the rearward flow of air (i.e., a wind) generated as the motorcycle **1** travels. The guide members **20** are attached to the side cowls **10.** The guide members **20** are arranged outward in the vehicle width direction of the side cowls **10.** The left guide member **20** is arranged leftward of the left side cowl **10.** As shown in FIG. **4****,** the guide member **20** projects outward in the vehicle width direction from the outer side surface **10W** of the side cowl **10.** The left guide member **20** projects leftward from the outer side surface **10W** of the left side cowl **10.**

As shown in FIG. **3****,** the guide member **20** is arranged forward of the airflow discharge port **14.** Here, the upper end **20t** of the guide member **20** is located upward relative to the upper end **14t** of the airflow discharge port **14.** The lower end **20b** of the guide member **20** is located downward relative to the lower end **14b** of the airflow discharge port **14.** As shown in FIG. **2****,** on a horizontal cross section passing through the airflow discharge port **14,** the guide member **20** is arranged forward of the airflow discharge port **14.** Note that the horizontal cross section passing through the airflow discharge port **14** is synonymous with a horizontal cross section that is at or below the upper end **14t** and at or above the lower end **14b** of the airflow discharge port **14.** On the horizontal cross section passing through the airflow discharge port **14,** the side cowl **10** extends forward and inward in the vehicle width direction from the airflow discharge port **14.**

The guide member **20** is formed in a plate shape. As shown in FIG. **3****,** the guide member **20** includes a first connecting portion **21** and a second connecting portion **22** connected to the side cowl **10,** and a plate portion **23** having an outer side surface **20W.** The second connecting portion **22** is located downward of the first connecting portion **21.** As shown in FIG. **2****,** the plate portion **23** is spaced outward in the vehicle width direction from the side cowl **10.**

The outer side surface **20W** extends forward and outward in the vehicle width direction from the first connecting portion **21.** On a horizontal cross section passing through the airflow discharge port **14,** an outer side surface **20W** extends forward and outward in the vehicle width direction. On a horizontal cross section passing through the airflow discharge port **14,** an outer side surface **20W** includes a front edge **20Wa,** a front portion **20Wb** extending rearward in the vehicle front-rear direction from the front edge **20Wa,** and a rear portion **20Wc** extending inward in the vehicle width direction from the rear end of the front portion **20Wb.** On a horizontal cross section passing through the airflow discharge port **14,** the angle between a line (not shown) parallel to the vehicle center line **CL** and the front portion **20Wb** is less than 45 degrees, and the angle between a line parallel to the vehicle center line **CL** and the rear portion **20Wc** is equal to or greater than 45 degrees and less than or equal to 90 degrees. On a horizontal cross section passing through the airflow discharge port **14,** the outer side surface **20W** is curved toward the airflow discharge port **14.**

As shown in FIG. **3****,** the first connecting portion **21** and the second connecting portion **22** extend rearward and downward. Here, as the vehicle is seen from the side, the length **L21** of the first connecting portion **21** is longer than the length **L22** of the second connecting portion **22.** The dimension **H21** in the vehicle up-down direction of the first connecting portion **21** is equal to or greater than the dimension **H14** in the vehicle up-down direction of the airflow discharge port **14.**

As shown in FIG. **5** and FIG. **6****,** the upper portion of the plate portion **23** extends downward and outward in the vehicle width direction from the first connecting portion **21,** and the lower portion of the plate portion **23** extends upward and outward in the vehicle width direction from the second connecting portion **22.** The guide member **20** and the side cowl **10** together delimit the duct **40** for passing the air therethrough. As shown in FIG. **5****,** the duct **40** includes an inlet port **41** that has an opening facing forward. As shown in FIG. **6****,** the duct **40** includes an outlet port **42** that has an opening facing downward.

As shown in FIG. **3****,** since the duct **40** extends rearward and downward, the duct **40** includes a closed portion **44** that does not have an opening facing rearward. The closed portion **44** is arranged forward of the airflow discharge port **14.** The closed portion **44** is arranged downward relative to the upper end **14t** of the airflow discharge port **14** and upward relative to the lower end **14b** of the airflow discharge port **14.** While there is no particular limitation on the dimension **H44** of the closed portion **44** in the vehicle up-down direction, it is herein 1/2 or more of the dimension **H14** of the airflow discharge port **14** in the vehicle up-down direction, and is equal to or greater than 2/3 of H14. Note that H44 may be equal to H14.

As shown in FIG. **5****,** an airflow guide plate **46** is provided inside the duct **40.** The airflow guide plate **46** extends outward in the vehicle width direction from the outer side surface **10W** of the side cowl **10.** The airflow guide plate **46** also extends rearward and downward. Here, one airflow guide plate **46** is provided inside the duct **40.** Note however that there is no particular limitation on the number of airflow guide plates **46.** The airflow guide plate **46** may be absent.

As shown in FIG. **3****,** as the vehicle is viewed from the side, the front edge **20Wa** of the guide member **20** aligns with the front edge **10Wa** of the side cowl **10** (see FIG. **5****).** As the vehicle is viewed from the side, the curved shape of the front edge **20Wa** of the guide member **20** is identical to the curved shape of the front edge **10Wa** of the side cowl **10.** Note however that there is no particular limitation on the shape of the front edge **20Wa** and the front edge **10Wa,** and the shape of the front edge **20Wa** and the shape of the front edge **10Wa** may be different from each other.

As shown in FIG. **1****,** in the present embodiment, a part of the guide member **20** and a part of the airflow discharge port **14** are located upward relative to the axle **6S** of the front wheel **6,** while another part of the guide member **20** and another part of the airflow discharge port **14** are located downward relative to the axle **6S** of the front wheel **6.** The outlet port **42** (see FIG. **6****)** of the duct **40** is located downward relative to the axle **6S** of the front wheel **6.** Note however that there is no particular limitation on the locations of the guide member **20,** the airflow discharge port **14** and the outlet port **42** of the duct **40.** The entirety of the guide member **20** and the entirety of the airflow discharge port **14** may be located downward or upward relative to the axle **6S** of the front wheel **6.** A part or whole of the outlet port **42** of the duct **40** may be located upward relative to the axle **6S** of the front wheel **6.**

The motorcycle **1** is configured as described above. As described above, when the motorcycle **1** is running, air flows from the front side to the rear side, and this air cools the oil in the oil cooler **30.** The flow of the air will be described now.

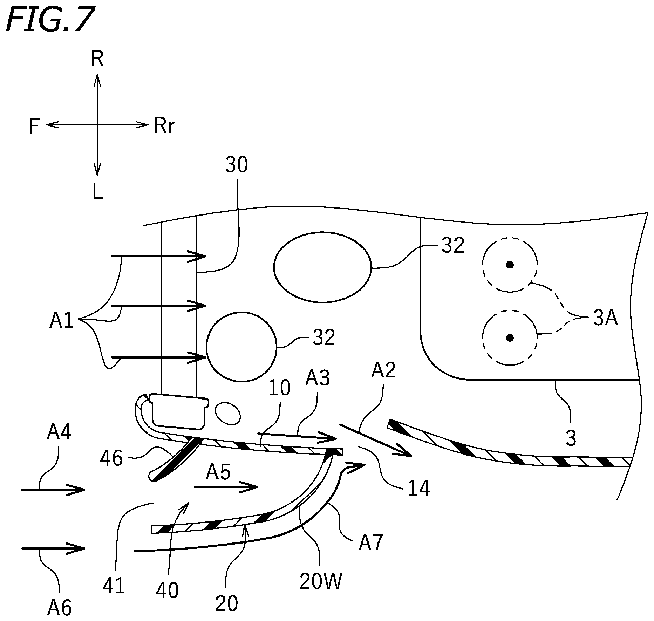

As shown in FIG. **7****,** a partial air **A1** flowing toward the rear side passes through the oil cooler **30** to cool the oil in the oil cooler **30.** A partial air **A2** having passed through the oil cooler **30** is discharged through the airflow discharge port **14** of the side cowl **10.**

Another partial air **A4** flowing toward the rear side flows into the duct 40 through the inlet port **41.** Since the duct **40** includes the closed portion **44** and extends rearward and downward, air **A5** flowing in the duct **40** is discharged downward through the outlet port **42.**

Another partial air **A6** flowing toward the rear side flows outside the duct **40.** Since the outer side surface **20W** of the guide member **20** is curved toward the airflow discharge port **14,** a partial air **A7** flowing outside the duct **40** flows along the outer side surface **20W** of the guide member **20** toward the airflow discharge port **14.**

Since the length of the outer side surface **20W** of the guide member **20** is longer than the length of the side cowl **10,** the velocity of the air **A7** flowing along the outer side surface **20W** is greater than the velocity of the air **A3** flowing along the surface of the side cowl **10.** Therefore, the pressure of the air **A7** on the downstream side is lower than the pressure of the air **A3** on the downstream side. A pressure difference is generated between the inside and the outside of the airflow discharge port **14,** with the pressure outside the airflow discharge port **14** being lower than the pressure inside. These pressure differences facilitate the discharge of the air **A2** through the airflow discharge port **14,** and increase the amount of the air **A2** discharged through the airflow discharge port **14.** This increases the amount of the air **A1** flowing through the oil cooler **30.** Thus, the cooling efficiency of the oil cooler **30** is improved.

According to the present embodiment, the following effects can be obtained.

The motorcycle **1** according to the present embodiment includes the guide member **20** arranged outward in the vehicle width direction of the side cowl **10** and forward of the airflow discharge port **14,** thereby facilitating the discharge of air through the airflow discharge port **14** as described above. Since it is possible to increase the amount of air flowing through the oil cooler **30,** it is possible to improve the cooling efficiency of the oil cooler **30.** Here, since the guide member **20** is arranged outside the side cowl **10,** there is no need to reduce the volume of the oil cooler **30** with the installation of the guide member **20.** It is possible to ensure a large volume of the oil cooler **30.** Therefore, according to the present embodiment, it is possible to both expand the volume of the oil cooler **30** and improve the cooling efficiency.

According to the present embodiment, on a horizontal cross section passing through the airflow discharge port **14,** the outer side surface **20W** of the guide member **20** includes the front portion **20Wb** extending rearward in the vehicle front-rear direction, and the rear portion **20Wc** extending inward in the vehicle width direction from the rear end of the front portion **20Wb.** This allows air to flow smoothly along the outer side surface **20W** of the guide member **20.** Since it is possible to effectively facilitate the discharge of air through the airflow discharge port **14,** it is possible to improve the cooling efficiency of the oil cooler **30.**

According to the present embodiment, on a horizontal cross section passing through the airflow discharge port **14,** the outer side surface **20W** of the guide member **20** is curved toward the airflow discharge port **14.** This allows air to flow smoothly along the outer side surface **20W** of the guide member **20.** Since it is possible to effectively facilitate the discharge of air through the airflow discharge port **14,** it is possible to improve the cooling efficiency of the oil cooler **30.**

There is no particular limitation on the configuration of the guide member **20.** The guide member **20** may be a block body. However, according to the present embodiment, the guide member **20** includes the plate portion **23,** and the plate portion **23** is spaced outward in the vehicle width direction from the side cowl **10.** Compared to the case where the guide member **20** is a block body, it is possible to ensure a sufficient distance between the outer side surface **20W** of the guide member **20** and the airflow discharge port **14** in the vehicle width direction while preventing an increase in the weight of the guide member **20.** The air **A7** flowing along the outer side surface **20W** of the guide member **20** can sufficiently reduce the pressure at the airflow discharge port **14.** Since it is possible to effectively facilitate the discharge of air through the airflow discharge port **14,** it is possible to improve the cooling efficiency of the oil cooler **30.**

According to the present embodiment, the guide member **20,** together with the side cowl **10,** delimits the duct **40.** The duct **40** includes the inlet port **41** having an opening facing forward and the outlet port **42** having an opening facing downward. This allows air to flow smoothly along the outer side surface **20W** of the guide member **20** toward the airflow discharge port **14,** and allows air flowing along the outer side surface **10W** of the side cowl **10** to flow downward through the outlet port **42.** This prevents the air **A7** flowing along the outer side surface **20W** of the guide member **20** from being disturbed by the air **A5** flowing along the outer side surface **10W** of the side cowl **10,** as shown in FIG. **7****.**

According to the present embodiment, the duct **40** includes the closed portion **44** that is located downward relative to the upper end **14t** of the airflow discharge port **14** and upward relative to the lower end **14b** and that does not have an opening facing rearward (see FIG. **3****).** With the closed portion **44,** it is possible to prevent air flowing along the outer side surface **20W** of the guide member **20** from being disturbed by air flowing along the outer side surface **10W** of the side cowl **10.**

While there is no particular limitation on the dimension of the closed portion **44,** the dimension **H44** of the closed portion **44** in the vehicle up-down direction is equal to or greater than 1/2 the dimension **H14** of the airflow discharge port **14** in the vehicle up-down direction in the present embodiment. Since the dimension of the closed portion **44** is relatively large, it is possible with the closed portion **44** to sufficiently prevent air flowing along the outer side surface **20W** of the guide member **20** from being disturbed by air flowing along the outer side surface **10W** of the side cowl **10.**

According to the present embodiment, the airflow guide plate **46** is arranged inside the duct **40.** Thus, it is possible to rectify the airflow in the duct **40.** Therefore, it is possible to suppress the air resistance of the guide member **20.**

According to the present embodiment, the engine **3** is an in-line four-cylinder engine. As described above, according to the present embodiment, it is possible to both expand the volume of the oil cooler **30** and improve the cooling efficiency. Therefore, it is possible to sufficiently cool even a relatively large in-line four-cylinder engine. Since the dimension in the vehicle width direction of an in-line four-cylinder engine is relatively large, even if the guide member **20** is added on the outside of the outer side cowl **10** in the vehicle width direction, the percentage of increase in the vehicle width direction of the motorcycle **1** can be kept relatively small compared to that of a single-cylinder engine.

One embodiment of a straddled vehicle has been described above. Note however that the above embodiment is merely one example, and various other embodiments are possible.

The guide member **20** is separate from the side cowl **10** and is attached to the side cowl **10** in the embodiment described above. However, a part or whole of the guide member **20** may be integrated with the side cowl **10.** A part or whole of the guide member **20** may be integral with the side cowl **10.**

The heat exchanger is not limited to the oil cooler **30.** The heat exchanger may be, for example, a radiator connected to the engine **3.**

On a horizontal cross section passing through the airflow discharge port **14,** the side cowl **10** extends forward and inward in the vehicle width direction from the airflow discharge port **14** in the embodiment described above, but it may extend parallel to the vehicle center line **CL** or it may extend forward and outward in the vehicle width direction.

While the guide member **20** and the side cowl **10** together form the duct **40** in the embodiment described above, the duct **40** may be absent. For example, the guide member **20** may have a portion that blocks the inlet port **41** and the outlet port **42** of the embodiment described above.

As the vehicle is viewed from the side, the length **L21** of the first connecting portion **21** may be equal to the length **L22** of the second connecting portion **22** or may be shorter than the length **L22** of the second connecting portion **22.** The dimension **H21** of the first connecting portion **21** in the vehicle up-down direction may be smaller than the dimension **H14** of the airflow discharge port **14** in the vehicle up-down direction.

There is no particular limitation on dimension of the guide member **20** and the airflow discharge port **14** in the up-down direction. The location of the upper end **20t** of the guide member **20** may be at or below the upper end **14t** of the airflow discharge port **14.** The location of the lower end **20b** of the guide member **20** may be at or above the lower end **14b** of the airflow discharge port **14.**

As the vehicle is viewed from the side, the airflow discharge port **14** may extend in the vertical direction, or may extend rearward and downward.

A straddled vehicle refers to a vehicle that is straddled by a rider. The straddled vehicle is not limited to the motorcycle **1.** The straddled vehicle may be an auto tricycle, an ATV (All Terrain Vehicle), or a snowmobile, for example.

### Reference Signs List

1: Motorcycle (straddled vehicle), 3: Internal combustion engine, 10: Side cowl, 14: Airflow discharge port, 20: Guide member, 20W: Outer side surface, 20Wb: Front portion of outer side surface, 20Wc: Rear portion of outer side surface, 21: First connecting portion, 22: Second connecting portion, 23: Plate portion, 30: Oil cooler (heat exchanger), 40: Duct, 41: Inlet port, 42: Outlet port, 44: Closed portion, 46: Airflow guide plate

## Claims

1. A straddled vehicle **(1),** comprising:
a heat exchanger **(30);**
a side cowl **(10)** arranged outward in a vehicle width direction relative to the heat exchanger **(30),** the side cowl **(10)** having an airflow discharge port **(14)** formed rearward in a vehicle front-rear direction relative to the heat exchanger **(30);** and
a guide member **(20)** arranged outward of the side cowl **(10)** in the vehicle width direction and forward of the airflow discharge port **(14)** in the vehicle front-rear direction;
wherein the guide member **(20)** includes a first connecting portion **(21)** that is located forward of the airflow discharge port **(14)** in the vehicle front-rear direction and connected to the side cowl **(10),** and an outer side surface **(20W)** that extends forward in the vehicle front-rear direction and outward in the vehicle width direction from the first connecting portion **(21);**
wherein on a horizontal cross section passing through the airflow discharge port **(14),** the side cowl **(10)** extends forward in the vehicle front-rear direction and inward in the vehicle width direction from the airflow discharge port **(14),** and the outer side surface **(20W)** of the guide member **(20)** extends forward in the vehicle front-rear direction and outward in the vehicle width direction; and
on a horizontal cross section passing through the airflow discharge port **(14),** the outer side surface **(20W)** of the guide member **(20)** includes a front edge **(20Wa),** a front portion **(20Wb)** that extends rearward in the vehicle front-rear direction from the front edge **(20Wa),** and a rear portion **(20Wc)** that extends inward in the vehicle width direction from a rear end of the front portion **(20Wb);**
on a horizontal cross section passing through the airflow discharge port **(14),** the outer side surface **(20W)** is curved toward the airflow discharge port **(14);**
**characterized in that**, on a horizontal cross section passing through the airflow discharge port **(14),** an angle between a line parallel to a vehicle center line **(CL)** and the front portion **(20Wb)** is less than 45 degrees, and an angle between a line parallel to the vehicle center line **(CL)** and the rear portion **(20Wc)** is either equal to 45 degrees, or equal to 90 degrees, or greater than 45 degrees and less than 90 degrees.

2. The straddled vehicle (1) according to claim 1, wherein:
the guide member (20) includes a plate portion (23) having the outer side surface (20W); and
the plate portion (23) is spaced outward in the vehicle width direction from the side cowl (10).

3. The straddled vehicle (1) according to any one of the foregoing claims, wherein:
the guide member (20) includes a second connecting portion (22) that is located downward of the first connecting portion (21) and connected to the side cowl (10); and
the guide member (20) and the side cowl (10) together delimit a duct (40) having an inlet port (41) that has an opening facing forward and an outlet port (42) that has an opening facing downward.

4. The straddled vehicle (1) according to claim 3, wherein the duct (40) includes a closed portion (44) that is located downward relative to an upper end (14t) of the airflow discharge port (14) and upward relative to a lower end (14b) of the airflow discharge port (14), and that does not have an opening facing rearward.

5. The straddled vehicle (1) according to claim 4, wherein a dimension (H44) of the closed portion (44) in a vehicle up-down direction is equal to or greater than 1/2 a dimension (H14) of the airflow discharge port (14) in the vehicle up-down direction.

6. The straddled vehicle (1) according to any one of claims 3 to 5, comprising an airflow guide plate (46) arranged inside the duct (40).

7. The straddled vehicle (1) according to any one of claims 3 to 6, wherein as the vehicle is viewed from the side, a length (L21) of the first connecting portion (21) is longer than a length (L22) of the second connecting portion (22).

8. The straddled vehicle (1) according to any one of the foregoing claims, wherein:
an upper end (20t) of the guide member (20) is located upward relative to an upper end (14t) of the airflow discharge port (14); and
a lower end (20b) of the guide member (20) is located downward relative to a lower end (14b) of the airflow discharge port (14).

9. The straddled vehicle (1) according to any one of claims 1 to 8, wherein a dimension (H21) of the first connecting portion (21) of the guide member (20) in a vehicle up-down direction is equal to or greater than a dimension (H14) of the airflow discharge port (14) in the vehicle up-down direction.

10. The straddled vehicle (1) according to any one of claims 1 to 9, wherein as the vehicle is viewed from the side, the airflow discharge port (14) extends rearward and upward.

11. The straddled vehicle (1) according to any one of claims 1 to 10, comprising an in-line four-cylinder internal combustion engine (3) arranged rearward of the heat exchanger (30).

## Patentansprüche

1. Grätschsitzfahrzeug (1), umfassend:
einen Wärmetauscher (30),
eine seitliche Haube (10), die weiter außen in einer Fahrzeugbreitenrichtung relativ zu dem Wärmetauscher (30) angeordnet ist, wobei die seitliche Haube (10) eine Luftfluss-Ausführöffnung (14) aufweist, die weiter hinten in einer Fahrzeug-Vorne-Hinten-Richtung relativ zu dem Wärmetauscher (30) ausgebildet ist, und
ein Führungsglied (20), das weiter außen als die seitliche Haube (10) in der Fahrzeugbreitenrichtung und vor der Luftfluss-Ausführöffnung (14) in der Fahrzeug-Vorne-Hinten-Richtung angeordnet ist,
wobei das Führungsglied (20) einen ersten Verbindungsteil (21), der vor der Luftfluss-Ausführöffnung (14) in der Fahrzeug-Vorne-Hinten-Richtung angeordnet und mit der seitlichen Haube (10) verbunden ist, und eine äußere Seitenfläche (20W), die sich nach vorne in der Fahrzeug-Vorne-Hinten-Richtung und außen in der Fahrzeugbreitenrichtung von dem ersten Verbindungsteil (21) erstreckt, umfasst,
wobei an einem horizontalen Querschnitt durch die Luftfluss-Ausführöffnung (14) sich die seitliche Haube (10) nach vorne in der Fahrzeug-Vorne-Hinten-Richtung und innen in der Fahrzeugbreitenrichtung von der Luftfluss-Ausführöffnung (14) erstreckt und sich die äußere Seitenfläche (20W) des Führungsglieds (20) nach vorne in der Fahrzeug-Vorne-Hinten-Richtung und außen in der Fahrzeugbreitenrichtung erstreckt,
wobei an einem horizontalen Querschnitt durch die Luftfluss-Ausführöffnung (14) die äußere Seitenfläche (20W) des Führungsglieds (20) eine vordere Kante (20Wa), einen vorderen Teil (20Wb), der sich nach hinten in einer Fahrzeug-Vorne-Hinten-Richtung von der vorderen Kante (20Wa) erstreckt, und einen hinteren Teil (20Wc), der sich nach innen in der Fahrzeugbreitenrichtung von einem hinteren Ende des vorderen Teils (20Wb) erstreckt, umfasst, und
wobei an einem horizontalen Querschnitt durch die Luftfluss-Ausführöffnung (14) die äußere Seitenfläche (20W) zu der Luftfluss-Ausführöffnung (14) gekrümmt ist,
**dadurch gekennzeichnet, dass** an einem horizontalen Querschnitt durch die Luftfluss-Ausführöffnung (14) der Winkel zwischen einer Linie, die parallel zu einer Fahrzeugmittenlinie (CL) ist, und dem vorderen Teil (20Wb) kleiner als 45 Grad ist und der Winkel zwischen einer Linie, die parallel zu der Fahrzeugmittenlinie (CL) ist, und dem hinteren Teil (20Wc) gleich 45 Grad, gleich 90 Grad oder größer als 45 Grad und kleiner als 90 Grad ist.

2. Grätschsitzfahrzeug (1) nach Anspruch 1, wobei:
das Führungsglied (20) einen Plattenteil (23), der die äußere Seitenfläche (20W) aufweist, umfasst, und
der Plattenteil (23) nach außen in der Fahrzeugbreitenrichtung von der seitlichen Haube (10) beabstandet ist.

3. Grätschsitzfahrzeug (1) nach einem der vorstehenden Ansprüche, wobei:
das Führungsglied (20) einen zweiten Verbindungsteil (22), der unterhalb des ersten Verbindungsteils (21) angeordnet ist und mit der seitlichen Haube (10) verbunden ist, umfasst, und
das Führungsglied (20) und die seitliche Haube (10) gemeinsam einen Kanal (40) mit einer sich nach vorne öffnenden Einlassöffnung (41) und einer sich nach unten öffnenden Auslassöffnung (42) definieren.

4. Grätschsitzfahrzeug (1) nach Anspruch 3, wobei der Kanal (40) einen geschlossenen Teil (44), der unterhalb eines oberen Endes (14t) der Luftfluss-Ausführöffnung (14) und oberhalb eines unteren Endes (14b) der Luftfluss-Ausführöffnung (14) angeordnet ist und keine nach hinten gerichtete Öffnung aufweist, umfasst.

5. Grätschsitzfahrzeug (1) nach Anspruch 4, wobei eine Dimension (H44) des geschlossenen Teils (44) in der Fahrzeug-Oben-Unten-Richtung gleich oder größer als 1/2 einer Dimension (H14) der Luftfluss-Ausführöffnung (14) in der Fahrzeug-Oben-Unten-Richtung ist.

6. Grätschsitzfahrzeug (1) nach einem der Ansprüche 3 bis 5, das eine in dem Kanal (40) angeordnete Luftfluss-Führungsplatte (46) umfasst.

7. Grätschsitzfahrzeug (1) nach einem der Ansprüche 3 bis 6, wobei, wenn das Fahrzeug von der Seite betrachtet wird, die Länge (L21) des ersten Verbindungsteils (21) länger als die Länge (L22) des zweiten Verbindungsteils (22) ist.

8. Grätschsitzfahrzeug (1) nach einem der vorstehenden Ansprüche, wobei:
ein oberes Ende (20t) des Führungsglieds (20) oberhalb eines oberen Endes (14t) der Luftfluss-Ausführöffnung (14) angeordnet ist, und
ein unteres Ende (20b) des Führungsglieds (20) unterhalb eines unteren Endes (14b) der Luftfluss-Ausführöffnung (14) angeordnet ist.

9. Grätschsitzfahrzeug (1) nach einem der Ansprüche 1 bis 8, wobei eine Dimension (H21) des ersten Verbindungsteils (21) des Führungsglieds (20) in einer Fahrzeug-Oben-Unten-Richtung gleich oder größer ist als eine Dimension (H14) der Luftfluss-Ausführöffnung (14) in der Fahrzeug-Oben-Unten-Richtung.

10. Grätschsitzfahrzeug (1) nach einem der Ansprüche 1 bis 9, wobei, wenn das Fahrzeug von der Seite betrachtet wird, sich die Luftfluss-Ausführöffnung (14) nach hinten und oben erstreckt.

11. Grätschsitzfahrzeug (1) nach einem der Ansprüche 1 bis 10, das einen Reihenvierzylinder-Verbrennungsmotor (3), der hinter dem Wärmetauscher (30) angeordnet ist, umfasst.

## Revendications

1. Véhicule chevauché (1), comprenant :
un échangeur de chaleur (30) ;
un capot latéral (10) agencé vers l'extérieur en direction de la largeur du véhicule par rapport à l'échangeur de chaleur (30), le capot latéral (10) comportant un orifice d'évacuation du flux d'air (14) formé vers l'arrière en direction avant-arrière du véhicule par rapport à l'échangeur de chaleur (30) ; et
un élément de guidage (20) agencé à l'extérieur du capot latéral (10) en direction de la largeur du véhicule et à l'avant de l'orifice d'évacuation du flux d'air (14) en direction avant-arrière du véhicule ;
dans lequel l'élément de guidage (20) inclut une première portion de connexion (21) qui est située à l'avant de l'orifice d'évacuation du flux d'air (14) en direction avant-arrière du véhicule et connectée au capot latéral (10), et une surface latérale externe (20W) qui s'étend vers l'avant en direction avant-arrière du véhicule et vers l'extérieur en direction de la largeur du véhicule depuis la première portion de connexion (21) ;
dans lequel, sur une section transversale horizontale passant par l'orifice d'évacuation du flux d'air (14), le capot latéral (10) s'étend vers l'avant en direction avant-arrière du véhicule et vers l'intérieur en direction de la largeur du véhicule à partir de l'orifice d'évacuation du flux d'air (14), et la surface latérale externe (20W) de l'élément de guidage (20) s'étend vers l'avant en direction avant-arrière du véhicule et vers l'extérieur en direction de la largeur du véhicule ; et
sur une section transversale horizontale passant par l'orifice d'évacuation du flux d'air (14), la surface latérale externe (20W) de l'élément de guidage (20) inclut un bord avant (20Wa), une portion avant (20Wb) qui s'étend vers l'arrière en direction avant-arrière du véhicule à partir du bord avant (20Wa), et une portion arrière (20Wc) qui s'étend vers l'intérieur en direction de la largeur du véhicule à partir d'une extrémité arrière de la portion avant (20Wb) ;
sur une section transversale horizontale passant par l'orifice d'évacuation du flux d'air (14), la surface latérale externe (20W) est courbée vers l'orifice d'évacuation du flux d'air (14) ;
**caractérisé en ce que**, sur une section transversale horizontale passant par l'orifice d'évacuation du flux d'air (14), un angle entre une ligne parallèle à une ligne centrale du véhicule (CL) et la portion avant (20Wb) est inférieur à 45 degrés, et un angle entre une ligne parallèle à la ligne centrale du véhicule (CL) et la portion arrière (20Wc) est soit égal à 45 degrés, soit égal à 90 degrés, soit supérieur à 45 degrés et inférieur à 90 degrés.

2. Véhicule chevauché (1) selon la revendication 1, dans lequel :
l'élément de guidage (20) inclut une portion de plaque (23) comportant la surface latérale externe (20W) ; et
la portion de plaque (23) est espacée vers l'extérieur en direction de la largeur du véhicule à partir du capot latéral (10).

3. Véhicule chevauché (1) selon l'une quelconque des revendications précédentes, dans lequel :
l'élément de guidage (20) inclut une deuxième portion de connexion (22) qui est située plus bas que la première portion de connexion (21) et connectée au capot latéral (10) ; et
l'élément de guidage (20) et le capot latéral (10) délimitent ensemble un conduit (40) comportant un orifice d'entrée (41) qui présente une ouverture tournée vers l'avant et un orifice de sortie (42) qui présente une ouverture tournée vers le bas.

4. Véhicule chevauché (1) selon la revendication 3, dans lequel le conduit (40) inclut une portion fermée (44) qui est située plus bas qu'une extrémité supérieure (14t) de l'orifice d'évacuation du flux d'air (14) et plus haut qu'une extrémité inférieure (14b) de l'orifice d'évacuation du flux d'air (14), et qui ne comporte pas d'ouverture tournée vers l'arrière.

5. Véhicule chevauché (1) selon la revendication 4, dans lequel une dimension (H44) de la portion fermée (44) en direction haut-bas du véhicule est supérieure ou égale à la moitié d'une dimension (H14) de l'orifice d'évacuation du flux d'air (14) en direction haut-bas du véhicule.

6. Véhicule chevauché (1) selon l'une quelconque des revendications 3 à 5, comprenant une plaque de guidage de flux d'air (46) agencée à l'intérieur du conduit (40).

7. Véhicule chevauché (1) selon l'une quelconque des revendications 3 à 6, dans lequel, quand le véhicule est vu de côté, la longueur (L21) de la première portion de connexion (21) est supérieure à la longueur (L22) de la deuxième portion de connexion (22).

8. Véhicule chevauché (1) selon l'une quelconque des revendications précédentes, dans lequel :
une extrémité supérieure (20t) de l'élément de guidage (20) est située plus haut qu'une extrémité supérieure (14t) de l'orifice d'évacuation du flux d'air (14) ; et
une extrémité inférieure (20b) de l'élément de guidage (20) est située plus bas qu'une extrémité inférieure (14b) de l'orifice d'évacuation du flux d'air (14).

9. Véhicule chevauché (1) selon l'une quelconque des revendications 1 à 8, dans lequel une dimension (H21) de la première portion de connexion (21) de l'élément de guidage (20) en direction haut-bas du véhicule est supérieure ou égale à une dimension (H14) de l'orifice d'évacuation du flux d'air (14) en direction haut-bas du véhicule.

10. Véhicule chevauché (1) selon l'une quelconque des revendications 1 à 9, dans lequel, quand le véhicule est vu de côté, l'orifice d'évacuation du flux d'air (14) s'étend vers l'arrière et vers le haut.

11. Véhicule chevauché (1) selon l'une quelconque des revendications 1 à 10, comprenant un moteur à combustion interne à quatre cylindres en ligne (3) agencé à l'arrière de l'échangeur de chaleur (30).
